# EUROPEAN PATENT SPECIFICATION

(11) **EP 3 957 905 B1**
(45) Date of publication and mention of the grant of the patent: **18.03.2026**
(21) Application number: 21169800.6
(22) Date of filing: 22.04.2021
(51) Int. Cl.: F21V 7/04, F21V 7/00, G02B 19/00, F21Y 115/10, F21Y 105/16

(54) **ANTI-GLARE LAMP AND LIGHTING ARRANGEMENT METHOD USING THE LAMP**
BLENDSCHUTZLAMPE UND BELEUCHTUNGSANORDNUNGSVERFAHREN MIT DIESER LAMPE
LAMPE ANTIREFLET ET PROCÉDÉ D'AGENCEMENT DE L'ÉCLAIRAGE UTILISANT CETTE LAMPE

(30) Priority: 18.08.2020 CN 202010828951; 16.09.2020 CN 202010972229
(43) Date of publication of application: 23.02.2022
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: Liu, Xiaoyun, Ningbo, 315103 (CN); Xu, Kai, Ningbo, 315103 (CN); HE, Zuping, Ningbo, 315103 (CN); ZENG, Guoqing, Ningbo, 315103 (CN)
(74) Representative: 2K Patentanwälte Blasberg Kewitz & Reichel

(56) References cited:
- AU-A1- 2008 200 821
- CN-A- 108 361 637
- DE-A1- 102013 201 950
- US-A- 4 991 072
- US-A1- 2005 111 220
- US-A1- 2005 168 986
- US-A1- 2007 189 019
- US-A1- 2010 271 827
- US-A1- 2013 120 986
- US-A1- 2013 215 612

## Description

### RELATED APPLICATION

This application claims priority to a Chinese Patent Application No. CN 202010972229.7, filed on September 16, 2020.

### FIELD OF THE TECHNOLOGY

The invention relates to the field of lighting technology, in particular to an anti-glare lamp and a lighting arrangement method using the lamp.

### BACKGROUND OF THE INVENTION

In the context of energy conservation and environmental protection, LED lamps are increasingly used in the home and commercial lighting fields because of their high light-emitting efficiency and good light-gathering performance. Regarding indoor lighting design applications in homes, offices or commercial places, visual comfort is extremely important. To achieve this, products that reduce direct glare and reflected glare should be selected. The correct placement of the lamp and the use of optical components that can reduce direct glare and reflected glare can reduce the impact of glare on people or damage to human eyes.
AU 2008 200 821 A1, US 2005/111220 A1, US 2005/168986 A1, DE 10 2013 201950 A1, US 2010/271827 A1, US 2013/120986 A1, US 4 991 072 A, CN 108 361 637 A, US 2007/189019 A1 and US 2013/0215612 A1 disclose different configurations of LED reflectors.

To reduce glare, it is necessary to provide a uniform direct beam as much as possible, and reduce the horizontal beam parallel to the horizontal plane of the lighting space. For this reason, the existing space lighting mainly uses reflectors or shutters to restrict the illumination beam to the undesired direction, or increase the shading angle of the lamp (that is, the angle between the illumination beam and the horizontal line). Another method is to use a scattering element to cover the bright light beam, but it will affect the light effect or the anti-glare effect is not good.

### BRIEF SUMMARY OF THE INVENTION

In view of this, the present invention provides an anti-glare lamp according to claim 1 and a lighting arrangement method using the anti-glare lamp according to claim 12 to solve the above technical problems.

An anti-glare lamp, comprising a lamp holder, the lamp holder is provided with a light source and a reflector arranged in the light emitting direction of the light source, and the reflector is cone-shaped or cone-like with a small end facing the light source, and the light source includes a first light beam directly emitted after passing through the reflector and a second light beam emitted after being reflected by the reflector, wherein a maximum light emission direction of the first light beam is defined as a central axis, and in any plane where the central axis is located, the maximum included angle between the second light beam and the central axis is less than or equal to the maximum included angle between the first light beam and the central axis.
preferably, in a plane perpendicular to the central axis, the reflector intersects the plane to form a regular polygon.
preferably, in a plane perpendicular to the central axis, the reflector intersects the plane to form a rectangle or a regular hexagon.
preferably, in any plane where the central axis is located, the inner surface of the reflector is two sections of reflective structure opposed to each other.
the reflective structure is at least partially curved, and the center of curvature of the curved portion of the reflective structure is located in the outside of the reflector.
preferably, the reflective structure is formed by connecting multiple segments of curves.
it further comprises a light shield arranged between the outer wall of the reflector and the lamp holder, and the light shield is arranged around the light source.
preferably, the reflective surface of the reflector is a mirror surface.
the light source is provided with multiple, and the reflector is correspondingly provided with multiple.
at least one light source is distributed along the transverse direction and at least two are distributed along the longitudinal direction; and the reflector is also correspondingly setting, at least one is distributed along the transverse direction, and at least two are distributed along the longitudinal direction.
the reflectors are spaced apart along the transverse direction and/or along the longitudinal direction, and the top edges of adjacent reflectors are mutually spaced in parallel setting.

The anti-glare lamp comprises a light shield arranged between the outer wall of the reflector and the lamp holder, the light shield includes a top light shielding area connected to the reflectors and a side light shielding area arranged on the periphery of all the reflectors.
the inner surface of the light shield is treated with light absorption.
preferably, the outer surface of the top light shielding area and/or the side light shielding area is a mirror surface.
preferably, the light shield and the reflector are integrally formed and manufactured.
preferably, the anti-glare lamp further comprises a circuit board where the light source locates, and the circuit board is arranged on the lamp holder.
preferably, the reflector is fixedly connected to the circuit board.
preferably, a hook portion is provided on the back of the reflector, and the circuit board is provided with a connecting hole for clamping connection with the hook portion.
preferably, a light-transmitting insulating layer is provided between the light source and the reflector.

The lighting arrangement method of the present invention adopts the above-mentioned anti-glare lamp and includes the following steps:
(1) The two rows of shelves are spaced apart and arranged in parallel, with a pedestrian passage in the middle;
(2) The anti-glare lamp is provided directly above the middle of the pedestrian passage;
(3) In a plane perpendicular to the length direction of the pedestrian passage, the outermost light of the first beam of the anti-glare lamp does not exceed the outer side of the top of the shelf on the same side.

### Technical effects of the present invention:

The anti-glare lamp of the present invention has a good deep anti-glare technology. The reflector is used to reflect and distribute the light beam to achieve the effect of not seeing the light, so that the vision of the entire space is very comfortable, and the light efficiency is higher and more energy-saving.

### BRIEF DESCRIPTION OF THE DRAWINGS

The embodiments are described below in conjunction with the accompanying drawings, in which:
FIG.1 is a schematic structural diagram of an anti-glare lamp according to an embodiment.
FIG.2 is a schematic diagram of the explosion structure of the anti-glare lamp of FIG.1.
FIG.3 is a schematic diagram of an exploded structure of the anti-glare lamp of FIG.1 from another angle.
FIG.4 is an enlarged schematic diagram of part A in FIG.3.
FIG.5 is a schematic cross-sectional view of the anti-glare lamp of FIG.1 (with the lamp holder removed) at the middle section of the reflector.
FIG.6 is a schematic cross-sectional view of the anti-glare lamp of FIG.1 (with the lamp holder removed) at the hook portion.
FIG.7 is an arrangement diagram of an anti-glare lamp adopting a lighting arrangement method according to an embodiment of the present invention.

### DETAILED DESCRIPTION OF THE INVENTION

. The embodiments will be described in detail below. Examples of the embodiments are shown in the accompanying drawings, wherein the same or similar reference numerals indicate the same or similar elements or elements with the same or similar functions. The embodiments described below with reference to the accompanying drawings are exemplary, and are only used to explain the present invention, and cannot be understood as a limitation to the present invention.

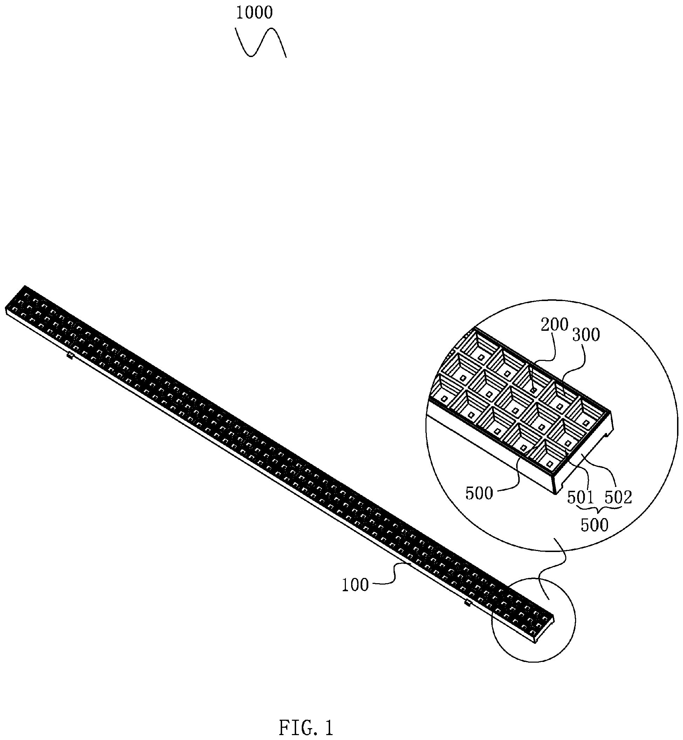

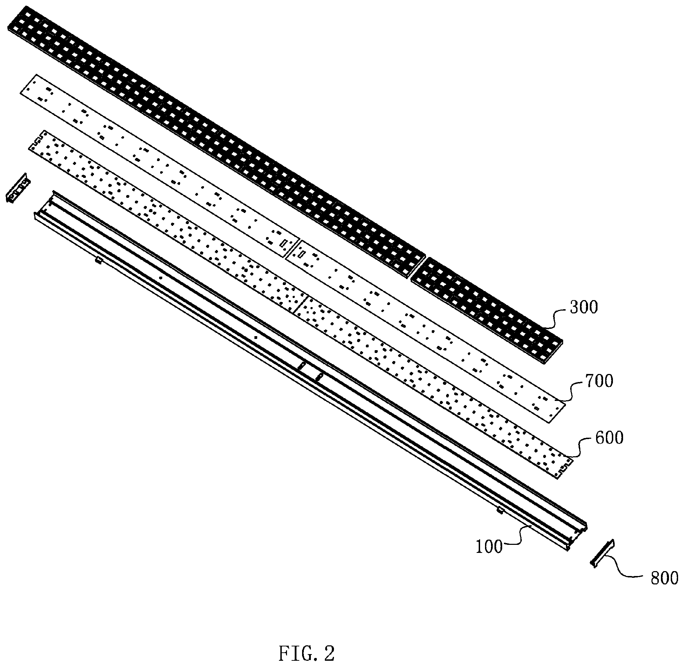

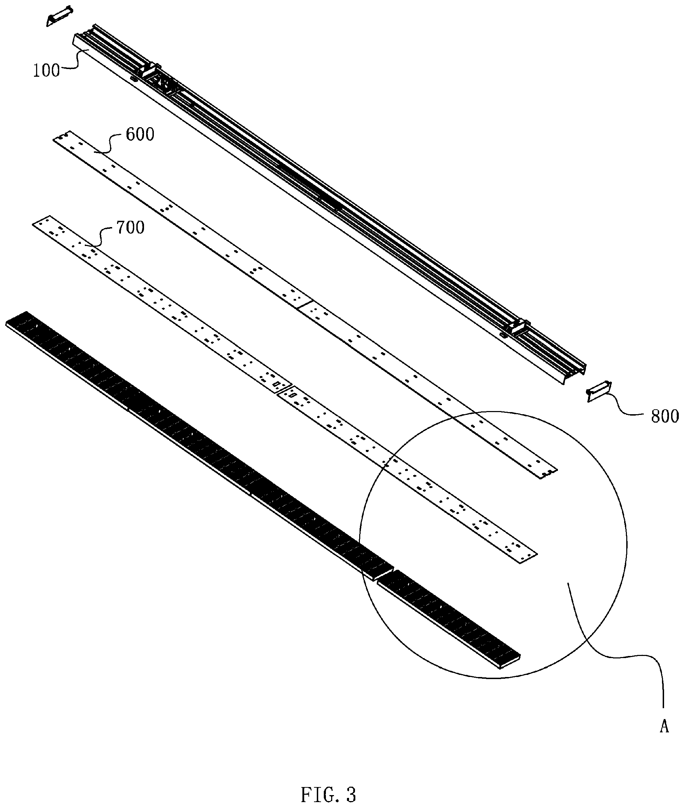

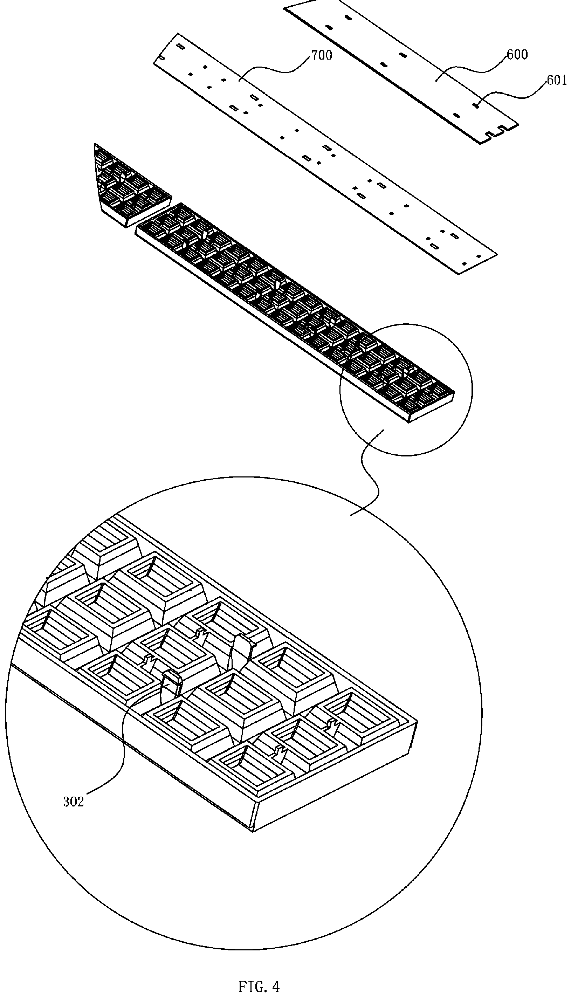

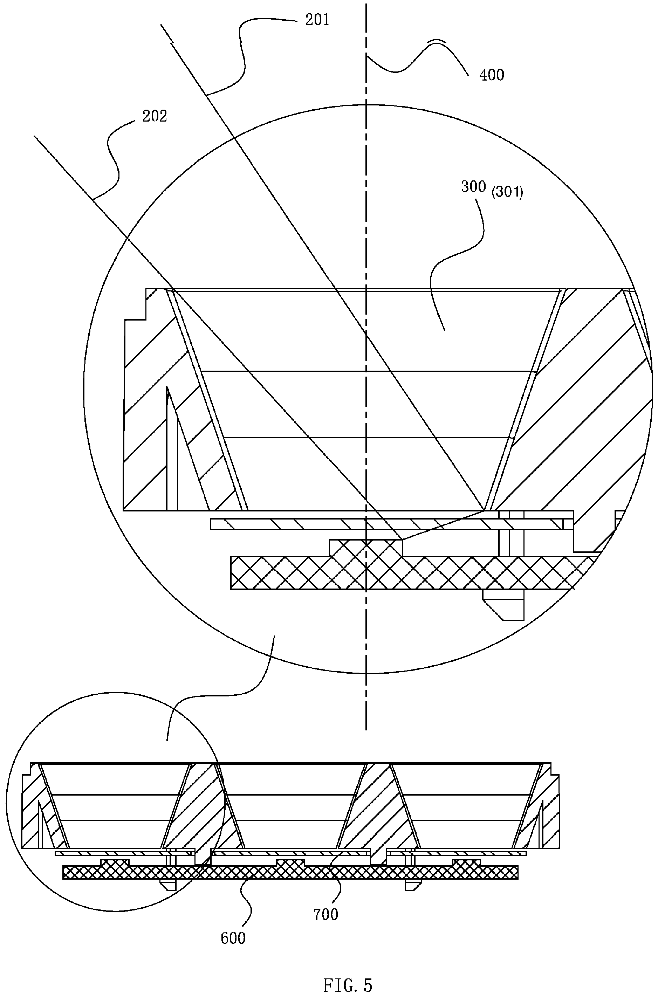

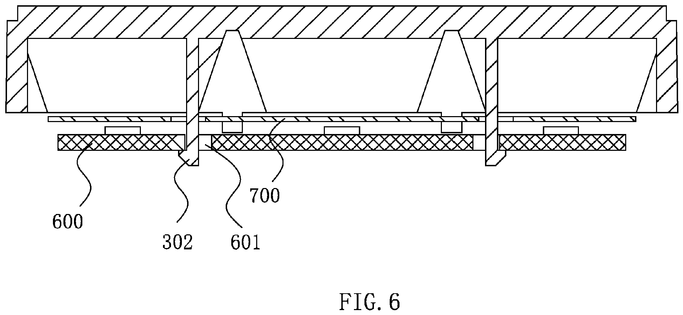

As shown in Figures 1 to 6, the anti-glare lamp 1000 of the present embodiment includes a lamp holder 100 on which a light source 200 and a reflector 300 arranged in the light emitting direction of the light source 200 are provided. The reflector 300 is approximately tapered, and the small end faces the light source 200. As a kind of reflector, the reflector is already very common in the field of lighting technology. It is roughly cone-shaped, with a large end as a light outlet, and a small end arranged with a light source, and the inner surface reflects part of the light out of the large end.

After the reflector 300 is used, the light source 200 will generate a first light beam 202 directly emitted after passing through the reflector 300 and a second light beam 201 emitted after being reflected by the reflector 300. For the convenience of description, define the maximum light emitting direction of the first light beam 202 is the central axis 400.

In any plane where the central axis 400 is located, it can be seen that the reflector 300 distributes the second light beam 201. In this embodiment, the inner surface of the reflector 300 is calculated and designed. In any plane where the central axis 400 is located, the maximum included angle between the second light beam 201 and the central axis 400 is less than or equal to the maximum included angle between the first light beam 202 and the central axis 400.

The maximum included angle between the first light beam 202 and the central axis 400 is also the shading angle of the reflector 300. Through the above setting, the angle of all reflected light can be limited within the shading angle range, so as to achieve outside of the reflector 300 no reflected light will enter the human eye, thereby realizing black light illumination, which can not only meet the lighting needs, but will not give people a dazzling feeling, creating a very comfortable lighting effect. The black light lighting effect, as the name implies, is that when people look at the light-emitting surface of the lamp from a certain angle, the light-emitting surface is black, and no light from the lamp can be seen. It feels that the lamp does not light up, which brings an excellent lighting experience. The problem of dazzling and heavy glare is solved.

In a plane perpendicular to the central axis 400, the reflector 300 will also distribute light of the second light beam 201, and its shape can be circular or polygonal. In order to improve the uniformity of light output, in a plane perpendicular to the central axis 400, the reflector 300 intersects the plane to form a regular polygon. The regular polygon may be a triangle, rectangle, pentagon, etc. Further, in this embodiment, in a plane perpendicular to the central axis 400, the reflector 300 intersects the plane to form a rectangle or a regular hexagon. Rectangles are easier to achieve multiple arrangements, and hexagons are also a better choice, which can form a honeycomb arrangement.

In this embodiment, in any plane where the central axis 400 is located, the inner surface of the reflector 300 is composed of two opposing reflective structures 301, and the reflective structures 301 are at least partially straight (not according to the invention) or curved. In the curved part of the reflective structure 301, the center of curvature is located outside the reflector 300. The light source 200 adopts a light-emitting chip, has a certain volume, and the light-emitting surface has an area. Taking the reflective structure 301 on one side as an example, it has a diffusion effect on the reflected light. The light from the light source 200 at the farthest light-emitting position from the reflective structure 301 falls at the bottom of the reflective structure 301, the angle between its reflection angle and the central axis 400 is the maximum angle between the second light beam 201 and the central axis 400, as long as the largest included angle between the second light beam 201 and the central axis 400 is less than or equal to the maximum included angle between the first light beam 202 and the central axis 400 to ensure that no reflected light can be seen within the shading angle range, the anti-glare effect is good, and the reflected light is diffused, thus making the light more uniform.

The reflective structure 301 can also be a straight line (not according to the invention). The light source 200 uses a light-emitting chip with a certain volume, and the light-emitting surface has an area. Taking the reflective structure 301 on one side as an example, it does not have the effect of condensing or diffusing the reflected light. When the light of the light source 200 where the light-emitting position is the farthest away from the reflective structure 301 falls at the bottom of the reflective structure 301, the angle between its reflection angle and the central axis 400 is the maximum angle between the second light beam 201 and the central axis 400, as long as the maximum included angle between the second light beams 201 and the central axis 400 is less than or equal to the maximum included angle between the first light beam 202 and the central axis 400, which ensures that no reflected light can be seen within the shading angle range, and the anti-glare effect is also not bad, but the light is easy to layer in some areas, and the light uniformity is not good enough.

In order to distribute the reflected light to achieve uniform light output, in this embodiment, the reflective structure 301 is formed by connecting multiple segments of curves, specifically, formed by connecting three segments of curves.

In order to make the light distribution on the illuminated surface uniform, the radius of curvature of the reflective structure 301 becomes smaller and smaller along the direction away from the light source 200. In this embodiment, the radius of curvature of the three-segment curve is getting smaller and smaller, and the curvature is getting larger. This is because the farther away from the light source 200, the greater the intensity of the light beam falling on the reflective structure 301. This setting can make the reflected beam distribution is more uniform.

In order to prevent light leakage, in this embodiment a light shield 500 arranged between the outer wall of the reflector 300 and the lamp holder 100 is further provided, and the light shield 500 is arranged around the light source 200.

In order to improve the light efficiency, in this embodiment, the reflective surface of the reflector 300 is a mirror surface. The process can be realized by vacuum coating, and the material, manufacturing process, and electroplating process of the reflective surface are all existing technologies, and will not be repeated here.

The anti-glare lamp 1000 of this embodiment is used for space lighting and requires a certain length or area. Therefore, the light source 200 is provided with multiple, and the reflector 300 is also provided with multiple correspondingly.

Generally, the plane distribution is performed. The central axes 400 of all the light sources 200 are arranged parallel to each other. The light source 200 has at least one distributed along the lateral direction and at least two distributed along the longitudinal direction. The reflector 300 also has at least one distributed along the lateral direction, and at least two distributed along the longitudinal direction. In this embodiment, to realize linear light source illumination, the number of vertical distribution is much more than that of horizontal distribution, and there are three light sources 200 distributed horizontally, and the reflector 300 is correspondingly distributed along the horizontal direction. At this time, the lamp holder 100 adopts a profile, the length is determined according to the number of light sources 200 distributed longitudinally, and encapsulated end covers 800 are provided at both ends.

In this embodiment, the reflectors 300 are distributed in an array along the transverse and longitudinal intervals, three in the transverse direction, and the number in the longitudinal direction is much greater than three, forming a strip light extending in the longitudinal direction. The top edge of the adjacent reflector 300 arranged in parallel to each other, the rectangular reflector 300 performs the above-mentioned distribution to obtain a uniformly distributed line light source effect. The reflectors 300 can also be seamlessly distributed along the transverse direction and along the longitudinal direction, so that the arrangement will be tight, and the number of light sources 200 required will increase when the length and width are unchanged.

In order to prevent the light source 200 from emitting light in other directions, the anti-glare lamp of this embodiment further includes a light shield 500 arranged between the outer wall of the reflector 300 and the lamp holder 100, and the light shield 500 includes a top light shielding area 501 connecting all the reflectors 300 and a side light shielding area 502 arranged on the periphery of all the reflectors 300.

In order to make the anti-glare lamp have almost no brightness outside the shading angle range, in this embodiment the inner surface of the light shield 500 is treated with light absorption. The specific implementation manner is that the inner surface is painted black or the light shield 500 is made of a light-absorbing material.

In order to facilitate manufacturing, in this embodiment, the light shield 500 and all the reflectors 300 are integrally formed and manufactured. At the same time, the outer surface of the top light shielding area 501 and the side light shielding area 502 are mirror surfaces, which is convenient for coating, reduces the structure and components, reduces the manufacturing cost, and improves the consistency of the product surface.

Further, in this embodiment, the anti-glare lamp further includes a circuit board 600 where the light source 200 locates, and the circuit board 600 is disposed on the lamp holder 100. In order to facilitate manufacturing, the reflector 300 is fixedly connected to the circuit board 600.

In order to facilitate manufacturing and realize automated production, a hook portion 302 is provided on the back of the reflector 300, and the circuit board 600 is provided with a connecting hole 601 for clamping with the hook portion 302.

When the structure of this embodiment is applied to a high-pressure lamp, a light transmitting insulating layer 700 is provided between the light source 200 and the reflector 300. The light transmitting insulating layer 700 is transparent or frosted. The transparent material has high light transmittance and does not affect the light effect. The frosted material will sacrifice some light effect, but the light uniformity will be better.

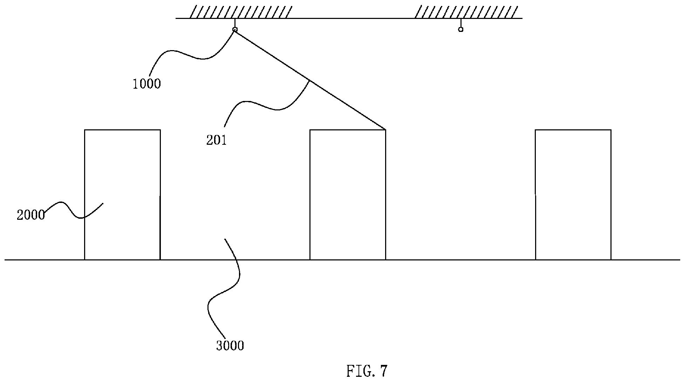

This embodiment is suitable for all occasions where lighting is required, especially commercial space lighting, and is most suitable for use in commercial environments with shelves. By the following method of arrangement, glare-free lighting can be achieved, as shown in Figure 7, the lighting layout method of this embodiment, using anti-glare lamp 1000, includes the following steps:
(1) Two rows of shelves 2000 are spaced apart and arranged in parallel, with a pedestrian passageway 3000 in the middle;
(2) The anti-glare lamp 1000 is provided directly above the middle of the pedestrian passage 3000;
(3) In a plane perpendicular to the length direction of the pedestrian passage 3000, the outermost light of the first light beam 202 of the anti-glare lamp 1000 does not exceed the outer side 2001 of the top of the shelf 2000 on the same side.

After the above arrangement, people can realize no glare when viewing the items on the shelf 2000 in the pedestrian passage 3000.

The above disclosure has been described by way of example and in terms of exemplary embodiment, and it is to be understood that the disclosure is not limited thereto. Rather, any modifications, equivalent alternatives or improvement etc. which fall under the appended claims are encompassed within the scope of the invention.

## Claims

1. An anti-glare lamp (1000), comprising a lamp holder (100), the lamp holder (100) is provided with a light source (200) and a reflector (300) arranged in the light emitting direction of the light source (200), wherein the light source (200) is provided with multiple, and the reflector (300) is correspondingly provided with multiple, and the reflector (300) is cone-shaped or cone-like with a small end facing the light source (200), and the light source (200) includes a first light beam (202) directly emitted after passing through the reflector (300) and a second light beam (201) emitted after being reflected by the reflector (300), wherein
a maximum light emission direction, which is the direction in which the light source emits light with maximum intensity, of the first light beam (202) is defined as a central axis (400) of the light beam emitted by the light source, and in any plane where the central axis (400) is located, the maximum included angle between the second light beam (201) and the central axis (400) is less than or equal to the maximum included angle between the first light beam (202) and the central axis (400),
wherein in any plane where the central axis (400) is located, the inner surface of the reflector (300) is two sections of reflective structure (301) opposed to each other and the reflective structures (301) are at least partially curved and in the curved part of the reflective structure (301), the center of curvature is located outside the reflector (300)
wherein at least one light source (200) is distributed along the transverse direction and at least two are distributed along the longitudinal direction; and the reflector (300) is also correspondingly setting, at least one is distributed along the transverse direction, and at least two are distributed along the longitudinal direction and wherein the reflectors (300) are spaced apart along the transverse direction and/or along the longitudinal direction, and the top edges of adjacent reflectors (300) are mutually spaced in parallel setting;
further comprising a light shield (500) arranged between the outer wall of the reflector (300) and the lamp holder (100), the light shield (500) includes a top light shielding area (501) connected to the reflectors (300) and a side light shielding area (502) arranged on the periphery of all the reflectors (300).
wherein the inner surface of the light shield (500) is treated with light absorption.

2. The anti-glare lamp (1000) as claimed in claim 1, wherein in a plane perpendicular to the central axis (400), the reflector (300) intersects the plane to form a regular polygon.

3. The anti-glare lamp (1000) as claimed in claim 2, wherein in a plane perpendicular to the central axis (400), the reflector (300) intersects the plane to form a rectangle or a regular hexagon.

4. The anti-glare lamp (1000) as claimed in claim 1, wherein the reflective structure (301) is formed by connecting multiple segments of curves.

5. The anti-glare lamp (1000) as claimed in any one of claims 1 to 4, wherein the reflective surface of the reflector (300) is a mirror surface.

6. The anti-glare lamp (1000) as claimed in claim 1, wherein the outer surface of the top light shielding area (501) and/or the side light shielding area (502) is a mirror surface.

7. The anti-glare lamp (1000) as claimed in claim 1, wherein the light shield (500) and the reflector (300) are integrally formed and manufactured.

8. The anti-glare lamp (1000) as claimed in claim 1, wherein the anti-glare lamp further comprises a circuit board (600) where the light source (200) locates, and the circuit board (600) is arranged on the lamp holder (100).

9. The anti-glare lamp (1000) as claimed in claim 8, wherein the reflector (300) is fixedly connected to the circuit board (600).

10. The anti-glare lamp (1000) as claimed in claim 9, wherein a hook portion (302) is provided on the back of the reflector (300), and the circuit board (600) is provided with a connecting hole (601) for clamping connection with the hook portion (302).

11. The anti-glare lamp (1000) as claimed in any one of claims 1 to 4, wherein a light transmitting insulating layer (700) is provided between the light source (200) and the reflector (300).

12. A lighting arrangement method using the anti-glare lamp as claimed in any of the claims 1-11, including the following steps:
(1) Two rows of shelves (2000) are spaced apart and arranged in parallel, with a pedestrian passageway (3000) in the middle;
(2) The anti-glare lamp (1000) is provided directly above the middle of the pedestrian passage (3000);
(3) In a plane perpendicular to the length direction of the pedestrian passage (3000), the outermost light of the first light beam (202) of the anti-glare lamp (1000) does not exceed the outer side of the top of the shelf (2000) on the same side.

## Patentansprüche

1. Eine blendfreie Lampe (1000), umfassend einen Lampenträger (100), wobei der Lampenträger (100) mit einer Lichtquelle (200) und einem Reflektor (300) versehen ist, der in der Lichtabstrahlungsrichtung der Lichtquelle (200) angeordnet ist, wobei die Lichtquelle (200) mit mehreren vorgesehen ist und der Reflektor (300) entsprechend mit mehreren vorgesehen ist, und der Reflektor (300) kegelähnlich oder kegelförmig ist, wobei ein schmales Ende der Lichtquelle (200) zugewandt ist, und die Lichtquelle (200) einen ersten Lichtstrahl (202), der direkt nach dem Durchgang durch den Reflektor (300) emittiert wird, und einen zweiten Lichtstrahl (201) umfasst, der nach der Reflexion durch den Reflektor (300) emittiert wird, wobei eine maximale Lichtemissionsrichtung, die die Richtung ist, in der die Lichtquelle Licht mit maximaler Intensität emittiert, des ersten Lichtstrahls (202) als Mittelachse (400) des von der Lichtquelle emittierten Lichtstrahls definiert ist, und in jeder Ebene, in der sich die Mittelachse (400) befindet, der maximale eingeschlossene Winkel zwischen dem zweiten Lichtstrahl (201) und der Mittelachse (400) kleiner oder gleich dem maximalen eingeschlossenen Winkel zwischen dem ersten Lichtstrahl (202) und der Mittelachse (400) ist,
wobei in jeder Ebene, in der sich die Mittelachse (400) befindet, die Innenfläche des Reflektors (300) aus zwei einander gegenüberliegenden Abschnitten einer reflektierenden Struktur (301) besteht und die reflektierenden Strukturen (301) zumindest teilweise gekrümmt sind und sich der Krümmungsmittelpunkt im gekrümmten Teil der reflektierenden Struktur (301) außerhalb des Reflektors 300 befindet
wobei mindestens eine Lichtquelle (200) entlang der Querrichtung und mindestens zwei entlang der Längsrichtung verteilt sind; und der Reflektor (300) ebenfalls entsprechend angeordnet ist, wobei mindestens einer entlang der Querrichtung verteilt ist und mindestens zwei entlang der Längsrichtung verteilt sind, und wobei die Reflektoren (300) entlang der Querrichtung und/oder entlang der Längsrichtung voneinander beabstandet sind und die Oberkanten benachbarter Reflektoren (300) in paralleler Anordnung voneinander beabstandet sind;
weiterhin umfassend eine Lichtabschirmung (500), die zwischen der Außenwand des Reflektors (300) und dem Lampenträger (100) angeordnet ist, wobei die Lichtabschirmung (500) einen oberen Lichtabschirmungsbereich (501), der mit den Reflektoren (300) verbunden ist, und einen seitlichen Lichtabschirmungsbereich (502) umfasst, der am Umfang aller Reflektoren (300) angeordnet ist.
wobei die Innenfläche des Lichtschutzes (500) mit einer Lichtabsorption behandelt ist.

2. Die blendfreie Lampe (1000) nach Anspruch 1, wobei in einer Ebene senkrecht zur Mittelachse (400) der Reflektor (300) die Ebene schneidet, um ein regelmäßiges Vieleck zu bilden.

3. Die blendfreie Lampe (1000) nach Anspruch 2, wobei der Reflektor (300) in einer Ebene senkrecht zur Mittelachse (400) die Ebene schneidet, um ein Rechteck oder ein regelmäßiges Sechseck zu bilden.

4. Die blendfreie Lampe (1000) nach Anspruch 1, wobei die reflektierende Struktur (301) durch Verbinden mehrerer Kurvensegmente gebildet ist.

5. Die blendfreie Lampe (1000) nach einem der Ansprüche 1 bis 4, wobei die reflektierende Oberfläche des Reflektors (300) eine Spiegelfläche ist.

6. Die blendfreie Lampe (1000) nach Anspruch 1, wobei die Außenfläche des oberen Lichtabschirmungsbereichs (501) und/oder des seitlichen Lichtabschirmungsbereichs (502) eine Spiegeloberfläche ist.

7. Die blendfreie Lampe (1000) nach Anspruch 1, wobei die Lichtabschirmung (500) und der Reflektor (300) einstückig ausgebildet und hergestellt sind.

8. Die blendfreie Lampe (1000) nach Anspruch 1, wobei die blendfreie Lampe ferner eine Leiterplatte (600) umfasst, auf der sich die Lichtquelle (200) befindet, und die Leiterplatte (600) auf dem Lampenträger (100) angeordnet ist.

9. Die blendfreie Lampe (1000) nach Anspruch 8, wobei der Reflektor (300) fest mit der Leiterplatte (600) verbunden ist.

10. Die blendfreie Lampe (1000) nach Anspruch 9, wobei an der Rückseite des Reflektors (300) ein Hakenabschnitt (302) vorgesehen ist und die Leiterplatte (600) mit einem Verbindungsloch (601) zum Festklemmen mit dem Hakenabschnitt (302) versehen ist.

11. Die blendfreie Lampe (1000) nach einem der Ansprüche 1 bis 4, wobei zwischen der Lichtquelle (200) und dem Reflektor (300) eine lichtdurchlässige Isolierschicht (700) vorgesehen ist.

12. Ein Verfahren zur Anordnung einer Beleuchtung unter Verwendung der blendfreien Lampe nach einem der Ansprüche 1 bis 11, das die folgenden Schritte umfasst:
(1) Zwei Reihen von Regalen (2000) sind voneinander beabstandet und parallel angeordnet, mit einer Fußgängerpassage (3000) in der Mitte;
(2) Die blendfreie Lampe (1000) ist direkt über der Mitte des Fußgängergangs (3000) vorgesehen;
(3) In einer Ebene senkrecht zur Längsrichtung des Fußgängergangs (3000) überschreitet das äußerste Licht des ersten Lichtstrahls (202) der blendfreien Lampe (1000) nicht die Außenseite der Oberseite des Regals (2000) auf derselben Seite.

## Revendications

1. Une Lampe sans éblouissement (1000) comprenant un porte-lampe (100), le porte-lampe (100) étant muni d'une source lumineuse (200) et d'un réflecteur (300) disposé dans la direction d'émission lumineuse de la source lumineuse (200), la source lumineuse (200) est pourvue de plusieurs et le réflecteur (300) est pourvu de plusieurs en conséquence, et le réflecteur (300) est de type conique ou en forme de cône, une extrémité étroite de la source lumineuse (200), et la source lumineuse (200) comprend un premier faisceau lumineux (202) qui est émis directement après le passage à travers le réflecteur (300) et un second faisceau lumineux (201) qui est émis après réflexion par le réflecteur (300), une direction d'émission lumineuse maximale, qui est la direction dans laquelle la source lumineuse émet de la lumière avec une intensité maximale, du premier faisceau lumineux (202) étant définie comme l'axe médian (400) du faisceau lumineux émis par la source lumineuse, et dans chaque plan dans lequel se trouve l'axe médian (400), l'angle inclus maximal entre le second faisceau lumineux (201) et l'axe médian (400) est inférieur ou égal à l'angle inclus maximal entre le premier faisceau lumineux (202) et l'axe médian (400),
dans lequel, dans chaque plan dans lequel se trouve l'axe médian (400), la surface intérieure du réflecteur (300) est constituée de deux parties opposées d'une structure réfléchissante (301) et les structures réfléchissantes (301) sont au moins partiellement courbées et le centre de courbure dans la partie courbée de la structure réfléchissante (301) se trouve à l'extérieur du réflecteur 300
, au moins une source lumineuse (200) étant répartie dans le sens transversal et au moins deux dans le sens longitudinal ; et le réflecteur (300) est également disposé de manière correspondante, au moins un étant réparti dans le sens transversal et au moins deux étant répartis dans le sens longitudinal, et les réflecteurs (300) étant espacés les uns des autres dans le sens transversal et/ou dans le sens longitudinal et les bords supérieurs des réflecteurs adjacents (300) étant espacés les uns des autres dans une disposition parallèle ; comprenant en outre un occultateur lumineux (500) disposé entre la paroi extérieure du réflecteur (300) de l'et le porte-lampe (100), l'occultateur lumineux (500) comprenant une région supérieure de l'occultateur lumineux (501) reliée aux réflecteurs (300) et une région latérale de l'occultateur lumineux (502) disposée à la périphérie de tous les réflecteurs (300).
la surface intérieure du pare-lumière (500) étant traitée avec un matériau absorbant la lumière.

2. La lampe sans éblouissement (1000) selon la revendication 1, dans laquelle, dans un plan perpendiculaire à l'axe médian (400), le réflecteur (300) coupe le plan pour former un polygone régulier.

3. La lampe sans éblouissement (1000) selon la revendication 2, dans laquelle le réflecteur (300) coupe le plan perpendiculaire à l'axe médian (400) pour former un rectangle ou un hexagone régulier.

4. La lampe sans éblouissement (1000) selon la revendication 1, dans laquelle la structure réfléchissante (301) est formée en reliant plusieurs segments courbes.

5. La Lampe sans éblouissement (1000) selon l'une des revendications 1 à 4, dans laquelle la surface réfléchissante du réflecteur (300) est une surface miroitante.

6. La Lampe sans éblouissement (1000) selon la revendication 1, dans laquelle la surface extérieure de la région supérieure de l'occultateur lumineux (501) et/ou de la région latérale de l'occultateur lumineux (502) est une surface réfléchissante.

7. La Lampe sans éblouissement (1000) selon la revendication 1, dans laquelle l'occultateur lumineux (500) et le réflecteur (300) sont formés et fabriqués d'un seul tenant.

8. La Lampe sans éblouissement (1000) selon la revendication 1, dans laquelle la lampe sans éblouissement comprend en outre une carte de circuit imprimé (600) sur laquelle se trouve la source lumineuse (200), et la carte de circuit imprimé (600) est disposée sur le porte-lampe (100).

9. La lampe sans éblouissement (1000) selon la revendication 8, dans laquelle le réflecteur (300) est relié de manière fixe à la carte de circuit imprimé (600).

10. La lampe sans éblouissement (1000) selon la revendication 9, dans laquelle un tronçon en crochet (302) est prévu à l'arrière du réflecteur (300) et la carte de circuit imprimé (600) est pourvue d'un trou de liaison (601) pour se fixer au tronçon en crochet (302).

11. La lampe sans éblouissement (1000) selon l'une des revendications 1 à 4, dans laquelle une couche isolante translucide (700) est prévue entre la source lumineuse (200) et le réflecteur (300).

12. Un procédé d'agencement d'un éclairage utilisant la lampe sans éblouissement selon l'une des revendications 1 à 11, comprenant les étapes suivantes :
(1) deux rangées de rayonnages (2000) sont espacées l'une de l'autre et disposées parallèlement, avec une allée piétonne (3000) au milieu ;
(2) la lampe sans éblouissement (1000) est prévue directement au-dessus du centre du passage piétonnier (3000) ;
(3) Dans un plan perpendiculaire à la direction longitudinale du passage piétonnier (3000), la lumière la plus éloignée du premier faisceau lumineux (202) de la lampe sans éblouissement (1000) ne dépasse pas le bord extérieur de la partie supérieure du rayonnage (2000) du même côté.
